# EUROPEAN PATENT SPECIFICATION

(11) **EP 2 897 776 B1**
(45) Date of publication and mention of the grant of the patent: **07.11.2018**
(21) Application number: 12795627.4
(22) Date of filing: 24.09.2012
(51) Int. Cl.: B29C 35/02, B29C 70/88, B29C 70/22

(54) **TUBE MADE FROM THERMO-FORMABLE FIBERS AND METHOD FOR MAKING SAME**
ROHR AUS WÄRMEFORMBAREN FASERN UND VERFAHREN ZUR HERSTELLUNG DAVON
TUBE FABRIQUÉ À PARTIR DE FIBRES THERMOFORMABLES ET SON PROCÉDÉ DE FABRICATION

(43) Date of publication of application: 29.07.2015
(73) Proprietor: Zehnder Group International AG, 5722 Gränichen (CH)
(72) Inventor: LAHAYE, René, Louis, Jean, NL-6211 CJ Maastricht (NL)
(74) Representative: Griebling, Onno
(86) International application number: PCT/NL2012/000061
(87) International publication number: WO 2014/046535

(56) References cited:
- WO-A2-01/78957
- WO-A2-01/87571
- CH-A1- 702 153

## Description

### FIELD OF THE INVENTION

The present invention relates to a tube manufactured from fabric with thermo-formable fibers.

### BACKGROUND OF THE INVENTION

Such tube is generally known in the state of the art. As an example, a fabric is mentioned that is obtained by knitting and wherein some or all of the fibers are thermo-formable. This means that, in the knitted condition, the fibers of the knitted fabric can move along each other such that a very flexible hose exists. By the thermo-forming step, that is to say heating the flexible tube in the desired use condition (for instance obtained by blowing up) the fibers melt together and the position concerned is fixated, and a relatively rigid tube emerges.

Such tube has many applications, and in particularly one must think of tubes with larger diameter and/or tubes that are to be arranged in places which are accessible with difficulty and wherein many bends are present.

As an example, the use in air channels is mentioned. The dimension of the channels is substantial, which means that in the state of the art large volumes of material must be displaced toward the building site. By the use of the tube as mentioned above, the transport can be substantially limited because the tube can be compactly packed in the knitted condition. Further, such tubes make it possible in a simple manner to take obstacles such as wall passages and ceiling passages. Not until the tube is in its final position, the desired shape thereof can be fixated by heating.

Although such tube is promising, the problem exists that making bends is not easy. It is of course possible to bend the flexible tube material that has not yet been subjected to a thermo-forming treatment, but in such case the wall material will quickly snap inwards or a constriction will arise in a different manner. This means that it is not possible to arrange bends in such tubes in an optimal manner. The subsequent thermo-forming treatment only fixates the previously chosen form and will not give any improvement.

WO01/78957 discloses a flat braid from thermo-fusible and electrically conductive fibers.

### SUMMARY OF THE INVENTION

It is an objective of the present invention to provide a tube with thermo-formable fibers which has the above-mentioned positive properties but with which it is possible to implement bends or other special shapes without one having to fear for the material to snap closed.

This objective is achieved in a tube which is manufactured by endless braiding. With the braiding action, a structure is obtained which completely deviates from the structure in knitting. It has been found that with such structure it is possible to apply bends in the tube not yet treated with thermo-forming, without the occurrence of a reduction of cross-section. According to the invention, the braided part consists of fibers extending in opposite direction with respect to the longitudinal axis. The angle which the fibers make with respect to the longitudinal axis is between 25° and 45° and is more particularly between 30° and 40° with respect to the longitudinal axis of the tube. It has furthermore appeared that the diameter of a tube manufactured in such manner can be increased before the thermo-forming. According to the invention, it is even possible to increase the cross-section of the tube at the location of a bend by compressing opposite parts of the tube along the central axis in the case of slight compression and laying of a bend in the desired shape. Furthermore, it is possible to obtain by compression a part with an increased diameter on which for instance further connections can be made.

According to the present invention, the fibers always comprise a number of filaments, such as 2-100 filaments per fiber. In that case, each filament has a diameter of 0.05-1 mm and more particularly 0.1-0.4 mm. Any desired material can be made for the filaments, and as an example a nylon material is mentioned. Obviously, this material has been treated in such manner that in any case some of the filaments exhibit the thermo-forming properties which are essential for the tube. Furthermore, different thermo-forming filaments may have different thermo-forming properties, for instance by melting at different temperature.

Heating of the tube in order to execute the thermo-forming by which the form thereof is fixated can be done by externally applying heat. In combination therewith, it is even possible to provide heating by blowing a heated gas through the tube. Apart from these possibilities, according to the invention it is further possible to heat the material of the tube by arranging a heating wire in the braided part of the tube. Such heating wire may be one of the filaments described above. Such heating wire may for instance be a carbon wire. However, it is preferred to use for this purpose a metallic wire, more particularly a stainless steel wire.

Depending on the application of the tube, it may be provided with an internal and external (protective) sleeve.

In the above, as an example a channel of an air treatment system was mentioned. In such case, the problem has arisen of bacteria which can affect the quality of the air. In such case, according to a variation of the present invention, a flexible sleeve arranged in the tube is applied. This sleeve additionally provides for air tightness. This sleeve may also be provided with a composition that counteracts the development of bacteria, for instance on the basis of silver ions.

It is also possible to arrange a sleeve externally around the tube, for instance for the sealing thereof, for providing fire protection and the like.

The material of the sleeve may be selected depending on application.

According to a variation of the invention, the sleeve comprises a thermoplastic polyurethane. Other materials such as polyethene are also possible. It is furthermore possible to use a latex foam in case fire protective properties are required.

The tube according to the present invention has more application as described above. For instance, it is possible to use the tube as carrier of cables, i.e. apply the tube as protection of cable trees. The cables concerned can be arranged in the tube in a simple manner, and the position concerned of the enveloping tube can be fixated subsequently by heating in any manner. The temperature of the thermo-forming may be adapted depending on application. As an example a range lying between 60°C and 160°C is mentioned here. In this context, it is possible to distinguish between the melting temperature of the surface of the fibers located at the outside of the tube and the melting temperature of fibers located at the inner side of the tube. For instance, the first mentioned temperature may be chosen lower than the last mentioned temperature.

The present invention further relates to a method for installing a tube such as described above. According to the method, this tube is arranged according to the desired trajectory and is bent in the desired position including the realization of the desired bends. Subsequently, by heating, the thermo-formable fibre can melt together with the surrounding fibers. The tube concerned may be suspended with a system such as described in Dutch patent application NL 2006463 of patentee.

If heating wire is used for heating the fibers, according to an advantageous embodiment of the invention, at both ends of the tube a current conducting ring is temporarily present when placing the tube, between which a potential difference is applied. The current conducting ring makes contact with the heating wire concerned in the braided part of the tube.

### BRIEF DESCRIPTION OF THE DRAWINGS

These and other aspects, features and advantages of the present invention will be further clarified by the following description of one or more exemplary embodiments while referring to the drawing in which same reference numerals indicate same or similar parts, in which the expressions "under/above", "higher/lower", "left/right" etcetera exclusively relate to the orientation shown in the figures, and in which:
Figure 1 shows a hose, as starting material for manufacturing the tube according to the present invention;
Figure 1a shows a detail of the fibre construction thereof;
Figure 1b shows a further detail of figure 1a;
Figure 1c shows an alternative;
Figure 2 shows the effect of compression of the hose;
Figure 3 illustrates the combination of the hose with an inner sleeve and an outer sleeve;
Figure 4 shows the thermo-forming of the tube according to the present invention;
Figure 5 schematically shows a device for braiding the tube according to the present invention.

### DETAILED DESCRIPTION OF THE INVENTION

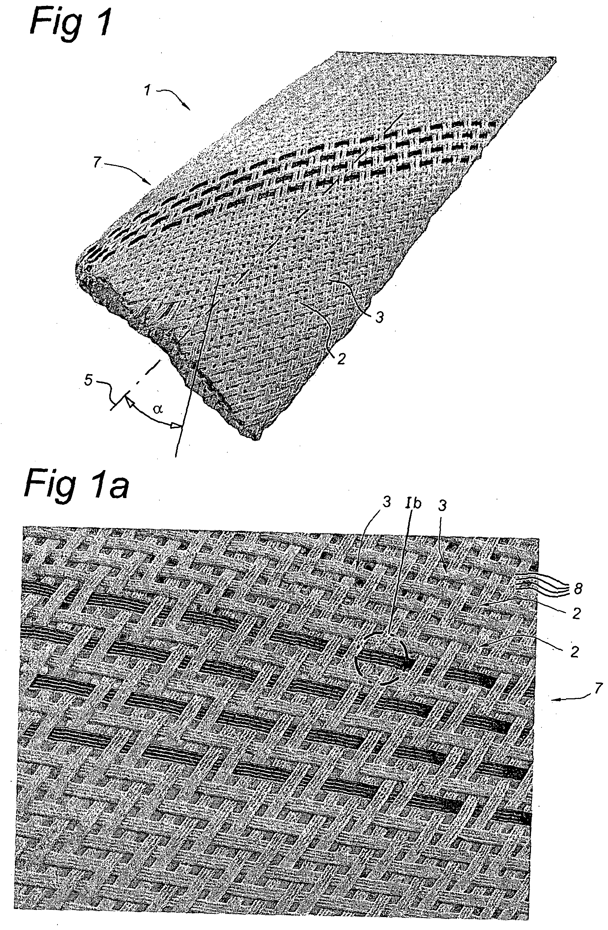

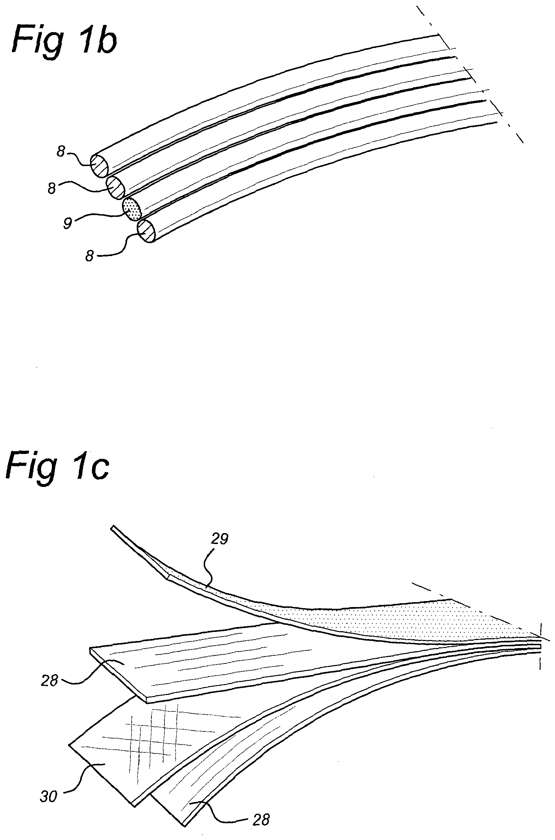

Figure 1 schematically shows a hose 1.

The hose 1 has a braided part 7. The braided part 7 consists of a number of groups of fibers, wherein the fibers are wound in opposite direction with respect to a longitudinal central axis 5 of the hose to a cylinder shape and are braided with each other. Herein, the angle α which the fibers make with respect to the longitudinal central axis is about 25°-45°, preferably about 30°-40°. Fibers wound in the one direction are indicated by reference numeral 2, while fibers wound in the opposite direction are indicated by reference numeral 3. The group of fibers 2 with the one winding direction will be indicated as first group, while the group of fibers 3 with the other winding direction will be indicated as second group.

A fiber 2, 3 may comprise multiple filaments 8, for instance from nylon material, such as shown in figure 1a. This is more clearly visible in the enlargement of figure 1b.

As alternative, a fiber 2, 3 may be implemented as a flat strip, or as a stacking of two or more flat strips, such as shown in figure 1c.

According to an important aspect of the present invention, one of the fiber groups comprises electrically conductive fibers. In this context, it is possible that all fibers of this group are electrically conductive, or that adjacent fibers are always alternatively conductive and non-conductive. In the latter case, it is easier to assure an electric insulation between adjacent conductive fibers. In the figures 1 and 1a, such embodiment is illustrated by four fibers 3 being coloured darker, between which there is always a lighter coloured fiber 3. The darker coloured fibers illustrate conductive fibers.

In case a fiber comprises multiple filaments, the desired electric conductivity may be achieved by one or multiple of the filaments being an electrically conductive filament, for instance a metal wire such a stainless steel wire. In figure 1b, a single electrically conductive filament 9 is schematically shown in combination with three non-conductive filaments 8. These four filaments lie parallel next to each other in the fibre. Alternatively, it is possible that an electrically conductive filament is wound around one or more of the non-conductive filaments. After all, such heating wire which is preferably of stainless steel may have a relatively small diameter.

In case a fiber is shaped as a flat strip, the desired electric conduction may be achieved by the fiber comprising a stacking of an electrically conductive layer and more particularly a metal layer 29 followed by a thermo-forming or melting layer 28, on top of which a carrier layer 30 follows, on top of which a further melting layer is stacked. It is possible to replace one or multiple of the fibers by such layer assembly.

The electrically conductive wire 9 or layer 29 will also be indicated as "heating wire". In the case of current passing, heat is generated by this wire. This heat will have the result that the thermo-forming filaments 8 or layers 28 will at least partly melt or harden. Because the heating wires are distributed well over the entire surface of the hose 1, after all, all fibers of the one group or 50% of the fibers of the one group are provided with heating wires, the hose will be fixated over its entire surface.

It is noted that the fibers of the second group may also be provided with heating wires, likewise all fibers or alternatingly yes and no, in which case it then is preferred that the heating wires are provided with an insulation mantle. In the case of the embodiment illustrated in figure 1c it is possible that the electrically conductive layers 29 are always sandwiched between plastic layers 28, so that in this variation it is easily possible that all fibers have the same configuration.

It is further noted that in the case of the filaments 8 it is possible to implement some filaments with other thermo-forming properties as others. It is further possible that certain filaments do not have thermo-forming properties at all (at the temperatures applied).

With the expression "thermo-formable" for some or all filaments is meant that on heating in any case the outer side of the filament 8 gets soft and can therefore adhere to either another molten filament or another non-molten filament. In all cases, mutual attachment of the fibers 2 and 3 is obtained by such thermo-forming treatment.

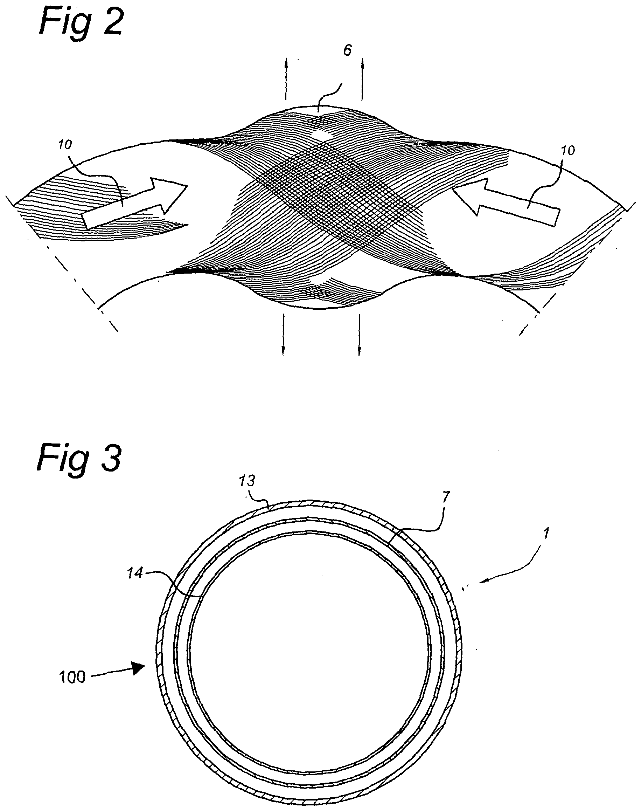

Before this thermo-forming treatment is executed, the hose 1 and more particularly the braided part thereof is very flexible. It is furthermore possible that, by applying a force in the direction of the arrows 10 such as shown in figure 2, it is possible to obtain a thickened part 6 with an increased cross-sectional area. Thanks to this, it is possible to arrange bends in the not yet thermally fixated shape of the flexible tube without having to fear for a local constriction.

In figure 3, an assembly 100 is shown of the hose 1 with a closed outer sleeve 13 around the hose 1, or at least around the braided part 7 of the hose 1, and a closed inner sleeve 14 within the hose 1, or at least within the braided part 7 of the hose 1. For sake of convenience, the hose, the outer sleeve and the inner sleeve are shown in the figure at mutual radial distance. The outer sleeve 13 and inner sleeve 14 are made of any suitable, flexible material, for instance a thin plastic foil. A preferred material is thermal plastic polyurethane or polyethene. Preferably, the diameter of the inner sleeve 14 is larger than the diameter of the outer sleeve 13. According to the invention, it is possible with this assembly to obtain a gas-tight and water-tight rigid tube by thermo-forming the assembly 30. The assembly 30 is flexible and can be bent in almost any desired shape, such as explained in the above with reference to the hose 1. When the desired shape is attained, the inner sleeve 14 is connected to a source of gas under increased pressure; for instance one end is connected to the gas source and the other end is closed. The gas source may be a gas bottle, but in a simple embodiment the gas is ambient air and the gas source is a pump or ventilator. By the increased pressure, the outer side of the inner sleeve 14 is pressed against the hose 1, causing the hose 1 to be pressed outwards against the inner side of the outer sleeve 13. Subsequently, a voltage source 12 is connected at the end of the hose 1, or at least on opposite sides of a hose segment to be fixated, so that a current starts flowing through the heating wires 9, 29. The generated heat not only causes the fibers 2, 3 to flow into each other and to be fixated, but also the outer sleeve 13 and the inner sleeve 14 are united with the fibers 2, 3. After the thermo-forming, the gas pressure can be removed. The formed gas-tight and liquid-tight tube will maintain its shape.

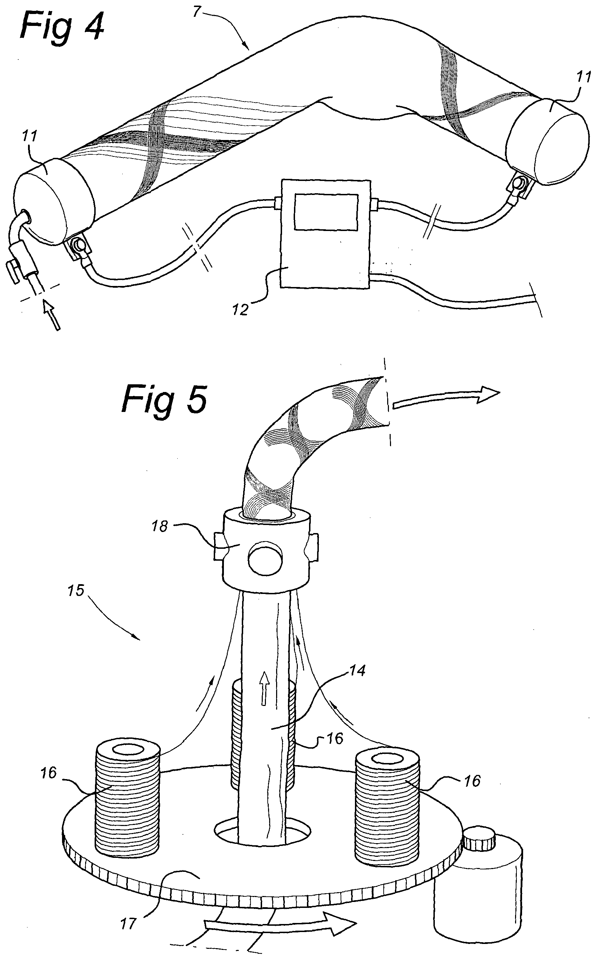

In figure 4 is shown that rings 11 are placed on the ends of the tube, making contact with the conductive element (filament 9 or layer 29) in the fibers. Possibly, the insulation of the conductive filaments or layers is first locally removed. Subsequently, using a voltage source 12, a potential difference is applied over the rings, causing heating to occur and causing the mutual position of the fibers 2 and 3 to be fixated.

In figure 5, an example is schematically shown of a device for braiding the tube. Such device is generally indicated at 15 and comprises a number of spools 16 provided with the fibers 2 and 3 concerned. These spools 16 rotate according to the direction of the arrows indicated with them. The spools 16 are placed on a rotary table 17 which is also arranged rotary with respect to a braiding head 18. It is obviously also possible that the braiding head 18 rotates with respect to the stationary rotary table 17. 14 indicates the supply of the inner sleeve. The outer sleeve 13 can be arranged in a similar manner.

It is further more possible to add substances which may for instance be bactericidal. As an example, the use of silver ions is mentioned.

According to the present invention, it has appeared surprisingly that by braiding a tube is obtained which can be simply laid in any desired position before the step of thermo-forming takes place, wherein the danger of constriction of cross-section can be avoided.

It will be clear to a person skilled in the art that the invention is not limited to the exemplary embodiments discussed in the above, but that several variations and modifications are possible within the protective scope of the invention as defined in the attached claims. Possible reference numerals used in the claims should not be interpreted as limiting the scope of that claim.

## Claims

1. Hose (1) comprising at least one braided part (7) with groups of fibers 2, 3 that are wound around a longitudinal centre line (5) in mutually opposite directions and that are braided with each other;
wherein each fiber (2, 3) makes an angle α of about 25°-45°, preferably about 30°-40°, with the longitudinal centre line (5);
wherein each fiber (2,3) comprises a thermo-formable material;
and wherein all fibers (2) with a first winding direction comprise at least one heating wire (9; 29), or wherein the fibers (2) with a first winding direction always alternatingly comprise at least one heating wire (9; 29) and are free of heating wires.

2. Hose according to claim 1, wherein all fibers (3) with a winding direction opposite to the first winding direction are free of heating wires.

3. Hose according to claim 1, wherein all fibers (3) with a winding direction opposite to the first winding direction comprise at least one heating wire (9; 29), or always alternatingly comprise at least one heating wire (9; 29) and are free of heating wires.

4. Hose according to any of the previous claims, wherein at least one fiber (2) comprises multiple mutually parallel filaments (8; 9), and wherein at least one of these filaments (8) comprises a thermo-formable material and wherein at least one of these filaments (9) comprises a electrically conductive material and preferably is a metal wire.

5. Hose according to claim 4, wherein each filament has a diameter of 0.05-1 mm and more particularly 0.1-0.4 mm.

6. Hose according to claim 4 or 5, wherein at least one of these filaments (8) comprises a nylon material.

7. Hose according to any of the previous claims 1-3, wherein at least one fiber (2) is formed as a flat strip and comprises a stacking of at least one conductive layer (29), preferably a metal layer, and at least one thermo-forming or melting layer (28).

8. Assembly (100) of a hose (1) according to any of the previous claims, an outer sleeve (13) arranged around at least the braided part (7) of the hose (1), and an inner sleeve (14) arranged within at least the braided part (7) of the hose (1), wherein the outer sleeve (13) and the inner sleeve (14) are made of a flexible, gas-tight and liquid-tight material.

9. Assembly according to claim 8, wherein the outer sleeve (13) and the inner sleeve (14) are made of a thermoplastic material, preferably polyurethane or polyethene.

10. Assembly according to claim 8 or 9, wherein the diameter of the inner sleeve (14) is larger than the diameter of the outer sleeve (13).

11. Method for manufacturing a rigid tube segment, comprising the steps of:
providing a hose (1) according to any of the previous claims 1-7;
arranging the hose in the desired position;
applying connections (11) for a voltage source (12) or current source at in axial direction opposite sides of the segment;
conducting a current through the heating wires (9; 29) of all fibers (2) located between said connections in order to thus generate Ohmic heat and melt the thermo-formable fibers (2, 3) together.

12. Method for manufacturing a rigid, gas-tight and liquid-tight tube segment, comprising the steps of:
providing a hose (1) according to one of the previous claims 8-10;
arranging the hose in the desired position;
applying gas under increased pressure in the inner sleeve (14);
applying connections (11) for a voltage source (12) or current source at in axial direction opposite sides of the segment;
conducting a current through the heating wires (9; 29) of all fibers (2) located between said connections to thus generate Ohmic heat and melt the thermo-formable fibers (2,3) together and to the outer sleeve (13) and the inner sleeve (14).

13. Method according to claim 11 or 12, wherein the connections (10) are current conducting rings (11), that are arranged around the hose and make contact with the heating wires (9; 29).

## Patentansprüche

1. Schlauch (1) umfassend mindestens einen geflochtenen Teil (7) mit Gruppen von Fasern (2, 3), die um eine längs verlaufende Mittellinie (5) in einander entgegengesetzten Richtungen gewickelt und miteinander verflochten sind;
wobei jede Faser (2, 3) einen Winkel α von etwa 25°-45°, vorzugsweise etwa 30°- 40°, mit der längs verlaufenden Mittellinie (5) bildet;
wobei jede Faser (2, 3) ein thermoformbares Material umfasst;
und wobei alle Fasern (2) mit einer ersten Wickelrichtung mindestens einen Heizdraht (9; 29) umfassen oder wobei die Fasern (2) mit einer ersten Wickelrichtung stets abwechselnd mindestens einen Heizdraht (9; 29) umfassen und frei von Heizdrähten sind.

2. Schlauch nach Anspruch 1, wobei alle Fasern (3) mit einer der ersten Wickelrichtung entgegengesetzten Wickelrichtung frei von Heizdrähten sind.

3. Schlauch nach Anspruch 1, wobei alle Fasern (3) mit einer der ersten Wickelrichtung entgegengesetzten Wickelrichtung mindestens einen Heizdraht (9; 29) umfassen oder stets abwechselnd mindestens einen Heizdraht (9; 29) umfassen und frei von Heizdrähten sind.

4. Schlauch nach einem der vorhergehenden Ansprüche, wobei mindestens eine Faser (2) mehrfache parallel zueinander verlaufende Filamente (8; 9) umfasst und wobei mindestens eines dieser Filamente (8) ein thermoformbares Material umfasst und wobei mindestens eines dieser Filamente (9) ein elektrisch leitendes Material umfasst und vorzugsweise ein Metalldraht ist.

5. Schlauch nach Anspruch 4, wobei jedes Filament einen Durchmesser von 0,05-1 mm und insbesondere 0,1 - 0,4 mm aufweist.

6. Schlauch nach Anspruch 4 oder 5, wobei mindestens eines dieser Filamente (8) ein Nylonmaterial umfasst.

7. Schlauch nach einem der vorhergehenden Ansprüche 1-3, wobei mindestens eine Faser (2) als flacher Streifen ausgebildet ist und eine Stapelung von mindestens einer leitfähigen Schicht (29), vorzugsweise einer Metallschicht, und mindestens einer thermoformenden Schicht oder Schmelzschicht (28) umfasst.

8. Anordnung (100) eines Schlauchs (1) nach einem der vorhergehenden Ansprüche, wobei ein äußerer Mantel (13) um mindestens den geflochtenen Teil (7) des Schlauchs (1) angeordnet ist und ein innerer Mantel (14) innerhalb mindestens des geflochtenen Teils (7) des Schlauchs (1) angeordnet ist, wobei der äußere Mantel (13) und der innere Mantel (14) aus einem flexiblen, gasdichten und flüssigkeitsdichten Material bestehen.

9. Anordnung nach Anspruch 8, wobei der äußere Mantel (13) und der innere Mantel (14) aus einem thermoplastischen Material, vorzugsweise Polyurethan oder Polyethen, bestehen.

10. Anordnung nach Anspruch 8 oder 9, wobei der Durchmesser des inneren Mantels (14) größer als der Durchmesser des äußeren Mantels (13) ist.

11. Verfahren zum Herstellen eines starren Rohrsegments, umfassend die folgenden Schritte:
Bereitstellen eines Schlauchs (1) nach einem der vorhergehenden Ansprüche 1-7;
Anordnen des Schlauchs in der gewünschten Position;
Anbringen von Anschlüssen (11) für eine Spannungsquelle (12) oder Stromquelle an axial entgegengesetzten Seiten des Segments;
Leiten eines Stroms durch die Heizdrähte (9; 29) aller zwischen den Anschlüssen befindlichen Fasern (2), um auf diese Weise Ohmsche Wärme zu erzeugen und die thermoformbaren Fasern (2, 3) miteinander zu verschmelzen.

12. Verfahren zum Herstellen eines starren, gasdichten und flüssigkeitsdichten Rohrsegments, umfassend die folgenden Schritte:
Bereitstellen eines Schlauchs (1) nach einem der vorhergehenden Ansprüche 8-10;
Anordnen des Schlauchs in der gewünschten Position;
Anwenden von Gas unter erhöhtem Druck in dem inneren Mantel (14);
Anbringen von Anschlüssen (11) für eine Spannungsquelle (12) oder Stromquelle an axial entgegengesetzten Seiten des Segments;
Leiten eines Stroms durch die Heizdrähte (9; 29) aller zwischen den Anschlüssen befindlichen Fasern (2), um auf diese Weise Ohmsche Wärme zu erzeugen und die thermoformbaren Fasern (2, 3) miteinander und an den äußeren Mantel (13) und den inneren Mantel (14) zu verschmelzen.

13. Verfahren nach Anspruch 11 oder 12, wobei die Anschlüsse (10) stromleitende Ringe (11) sind, die um den Schlauch herum angeordnet sind und mit den Heizdrähten (9; 29) Kontakt herstellen.

## Revendications

1. Tuyau (1) comprenant au moins une partie tressée (7) dotée de groupes de fibres 2, 3 qui sont enroulés autour d'une ligne centrale longitudinale (5) dans des directions mutuellement opposées et qui sont tressées l'une avec l'autre ;
chaque fibre (2, 3) formant un angle α d'environ 25 à 45°, de préférence d'environ 30 à 40° avec la ligne centrale longitudinale (5) ;
chaque fibre (2, 3) comprenant un matériau thermoformable ;
et toutes les fibres (2) ayant un premier sens d'enroulement comprenant au moins un fil chauffant (9 ; 29), ou les fibres (2) ayant un premier sens d'enroulement comprenant toujours alternativement au moins un fil chauffant (9 ; 29) et étant exemptes de fils chauffants.

2. Tuyau selon la revendication 1, dans lequel toutes les fibres (3) ayant un sens d'enroulement opposé au premier sens d'enroulement sont exemptes de fils chauffants.

3. Tuyau selon la revendication 1, dans lequel toutes les fibres (3) ayant un sens d'enroulement opposé au premier sens d'enroulement comprennent au moins un fil chauffant (9 ; 29) ou comprennent toujours alternativement au moins un fil chauffant (9 ; 29) et sont exemptes de fils chauffants.

4. Tuyau selon l'une quelconque des revendications précédentes, dans lequel au moins une fibre (2) comprend de multiples filaments mutuellement parallèles (8 ; 9) ; et dans lequel au moins un de ces filaments (8) comprend un matériau thermoformable et dans lequel au moins un de ces filaments (9) comprend un matériau électroconducteur et est de préférence constitué d'un fil métallique.

5. Tuyau selon la revendication 4, dans lequel chaque filament a un diamètre de 0,05 à 1 mm et plus particulièrement 0,1 à 0,4 mm.

6. Tuyau selon la revendication 4 ou 5, dans lequel au moins un de ces filaments (8) comprend un matériau de nylon.

7. Tuyau selon l'une des revendications 1 à 3 précédentes, dans lequel au moins une fibre (2) prend la forme d'une bande plane et comprend un empilement d'au moins une couche conductrice (29), de préférence une couche métallique, et au moins une couche thermoformante ou fondante (28).

8. Ensemble (100) constitué d'un tuyau (1) conforme à l'une quelconque des revendications précédentes, une gaine extérieure (13) disposée autour d'au moins la partie tressée (7) du tuyau (1), et une gaine intérieure (14) disposée dans au moins la partie tressée (7) du tuyau (1), la gaine extérieure (13) et la gaine intérieure (14) étant constituées d'un matériau flexible, étanche aux gaz et aux liquides.

9. Ensemble selon la revendication 8, dans lequel la gaine extérieure (13) et la gaine intérieure (14) sont constituées d'un matériau thermoplastique, de préférence du polyuréthane ou du polyéthène.

10. Ensemble selon la revendication 8 ou 9, dans lequel le diamètre de la gaine intérieure (14) est plus grand que celui de la gaine extérieure (13).

11. Procédé de fabrication d'un segment de tube rigide, comprenant les étapes suivantes :
l'utilisation d'un tuyau (1) selon l'une quelconque des revendications précédentes 1 à 7 ;
la disposition du tuyau dans la position voulue ;
l'application de connexions (11) pour une source de tension (12) ou pour une source de courant au niveau de côtés opposés selon une direction axiale du segment ;
la circulation d'un courant à travers les fils chauffants (9 ; 29) de toutes les fibres (2) situées entre lesdites connexions afin de produire ainsi une chaleur par effet Joule et faire fondre les fibres thermoformables (2, 3) ensemble.

12. Procédé de fabrication d'un segment de tube rigide, étanche aux gaz et aux liquides, comprenant les étapes suivantes :
l'utilisation d'un tuyau (1) selon l'une quelconque des revendications précédentes 8 à 10 ;
la disposition du tuyau dans la position voulue ;
l'application de gaz sous une pression accrue dans la gaine intérieure (14) ;
l'application de connexions (11) pour une source de tension (12) ou pour une source de courant au niveau de côtés opposés selon une direction axiale du segment ;
la circulation d'un courant à travers les fils chauffants (9 ; 29) de toutes les fibres (2) situées entre lesdites connexions afin de produire ainsi une chaleur par effet Joule et faire fondre les fibres thermoformables (2, 3) ensemble et vers la gaine extérieure (13) et la gaine intérieure (14).

13. Procédé selon la revendication 11 ou 12, dans lequel les connexions (10) sont des bagues électroconductrices (11) qui sont disposées autour du tuyau et qui assurent le contact avec les fils chauffants (9 ; 29).
